# EUROPÄISCHE PATENTSCHRIFT

(11) **EP 2 588 346 B1**
(45) Veröffentlichungstag und Bekanntmachung des Hinweises auf die Patenterteilung: **14.09.2016**
(21) Anmeldenummer: 11738955.1
(22) Anmeldetag: 04.07.2011
(51) Int. Cl.: B60R 13/02

(54) **FAHRZEUGINNENAUSSTATTUNGSTEIL INSBESONDERE TÜRINNENVERKLEIDUNG**
VEHICLE INTERIOR TRIM COMPONENT, IN PARTICULAR FOR DOOR INTERIOR TRIM
ELÉMENT D'HABILLAGE INTÉRIEUR DE VÉHICULE EN, PARTICULIER D'HABILLAGE INTÉRIEUR D'UNE PORTE

(30) Priorität: 02.07.2010 DE 102010025941
(43) Veröffentlichungstag der Anmeldung: 08.05.2013
(73) Patentinhaber: Johnson Controls Interiors GmbH & Co. KG, 47929 Grefrath (DE)
(72) Erfinder: SCHIDAN, Alexander, 42719 Solingen (DE); BRENDEL, Bernd, 47906 Kempen (DE); KALUS, Holger, 47228 Duisburg (DE); DEVECI, Cueneyt, 41334 Nettetal (DE)
(74) Vertreter: Trinks, Ole
(86) Internationale Anmeldenummer: PCT/EP2011/003304
(87) Internationale Veröffentlichungsnummer: WO 2012/000688

(56) Entgegenhaltungen:
- EP-A1- 0 939 234
- EP-A2- 1 571 353
- EP-A2- 1 632 681
- DE-A1-102008 037 617
- DE-U1- 29 809 255
- GB-A- 2 125 878
- GB-A- 2 424 461
- JP-A- 10 311 312
- JP-A- 11 344 015
- US-A1- 2009 218 464

## Beschreibung

Die vorliegende Erfindung betrifft ein Fahrzeuginnenausstattungsteil mit einem ersten Teil und einem daran befestigten zweiten Teil, wobei das erste und das zweite Teil bezüglich wenigstens einer Einflussgröße unterschiedliche Längenausdehnungskoeffizienten aufweisen.

Derartige Fahrzeuginnenausstattungsteile, beispielsweise Türinnenverkleidungen, sind aus dem Stand der Technik hinlänglich bekannt und weisen ein erstes Teil, insbesondere ein Verkleidungsteil auf, an dem ein zweites Teil, beispielsweise ein Befestigungsmittel, angeordnet ist. Das Dokument DE 29809255 U1 offenbart eine solche Türinnenverkleidung. Weisen diese beiden Teile nun bezüglich wenigstens einer Einflussgröße, beispielsweise Temperatur und/oder Feuchtigkeit, einen unterschiedlichen Längenausdehnungskoeffizienten auf und/oder tritt beim Aushärten eines Teils Schrumpfung auf, dann führt dies oftmals zu Rissen und/oder Deformierungen, insbesondere des Verkleidungsteils.

Es war deshalb die Aufgabe der vorliegenden Erfindung ein Fahrzeuginnenausstattungsteil zur Verfügung zu stellen, das die Nachteile des Standes der Technik nicht aufweist.

Gelöst wird die Aufgabe mit einem Fahrzeuginnenausstattungsteil mit einem ersten Teil und einem daran befestigten zweiten Teil, wobei das erste Teil und das zweite Teil bezüglich wenigstens einer Einflussgröße unterschiedliche Längenausdehnungskoeffizienten aufweisen und/oder ein Teil beim Aushärten zum Schrumpfen neigt, wobei mindestens ein Teil einen elastischen Befestigungsbereich aufweist.

Die vorliegende Erfindung betrifft ein Fahrzeuginnenausstattungsteil im Gestalt einer Türinnenverkleidung. Dieses Ausstattungsteil weist ein erstes flächiges Verkleidungsteil auf, das aus einem Naturstoff gefertigt ist. An diesem ersten Teil ist ein zweites Teil befestigt. Es handelt sich bei der Befestigung um einen Stoffschluss, der beispielsweise durch Kleben, Siegeln, Hintergießen/Hinterspritzen und/oder Hinterpressen erzielt wird. Das zweite Teil ist aus einem Kunststoff gefertigt.

Erfindungsgemäß weisen nun das erste und das zweite Teil bezüglich wenigstens einer Einflussgröße unterschiedliche Längenausdehnungskoeffizienten auf. Bei der Einflussgröße handelt es sich beispielsweise um Temperatur und/oder Feuchtigkeit. Alternativ oder zusätzlich schrumpft eines der Teile beim Aushärten.

Weiterhin erfindungsgemäß ist der Befestigungsbereich des des zweiten, Teils elastisch vorgesehen. Durch diese Elastizität wird Materialversagen und/oder Deformation, insbesondere des ersten Teils, verhindert, so dies insbesondere optisch ansprechend bleibt.

Der Befestigungsbereich gemäß der vorliegenden Erfindung ist der Bereich des zweiten Teils, der stoffschlüssig mit dem anderen, dem ersten Teil verbunden wird.

Vorzugsweise ist der Befestigungsbereich in der Befestigungsebene elastisch deformierbar vorgesehen.

Vorzugsweise weist der Befestigungsbereich eine elastische Schicht auf, die vorzugsweise zwischen dem ersten und dem zweiten Teil vorgesehen ist.

Weiterhin bevorzugt erstreckt sich der Befestigungsbereich fingerartig. Dieser mindestens eine Finger kann sich dann vorzugsweise strecken und kürzen sowie in der Befestigungsebene biegen.

Vorzugsweise reduziert sich die Dicke des Befestigungsbereichs zum Rand hin, so dass die Elastizität des Befestigungsbereichs zum Rand des zweiten Teils hin zunimmt.

Weiterhin bevorzugt ist der Befestigungsbereich zumindest abschnittsweise hohl vorgesehen, wodurch sich ebenfalls dessen Elastizität erhöht.

Gemäß einer weiteren bevorzugten Ausführungsform der vorliegenden Erfindung weist das Fahrzeuginnenausstattungsteil mehrere Befestigungsbereiche auf, die sich in unterschiedliche Raumrichtungen erstrecken. Dadurch können Kräfte, die aus unterschiedlichen Raumrichtungen wirken, besser aufgenommen werden.

Vorzugsweise weist der Befestigungsbereich des zweiten Teils Entlastungsausnehmungen, beispielsweise in Form von Schlitzen, auf, was zusätzlich die Elastizität des zweiten Bauteils und/oder von dessen Verbindungsbereich erhöht.

Erfindungsgemäß handelt es sich bei dem zweiten Teil um ein Kunststoffgieß- und/oder ein Kunststoffspritzteil, das besonders bevorzugt direkt auf das erste Teil aufgespritzt wird. Beim Aushärten entsteht vorzugsweise der Stoffschluss zwischen dem ersten und dem zweiten Teil. In der Regel weisen diese Gieß- oder Spritzgießteile eine Einspritzöffnung auf, die ganz besonders bevorzugt Teil des Befestigungsbereichs des zweiten Teils ist.

Gemäß einer weiteren bevorzugten Ausführungsform weist das zweite Teil ein Dehn- und/oder Federelement auf, das insbesondere zwischen zwei Befestigungsbereichen und/oder zwei Befestigungsausnehmungen vorgesehen ist.

Erfindungsgemäß handelt es sich bei dem ersten Teil um ein Verkleidugsteil und bei dem zweiten Teil um ein Befestigungsmittel.

Im Folgenden wird die Erfindung anhand der Figuren 1-8 erläutert. Diese Erläuterungen sind lediglich beispielhaft und schränken den allgemeinen Erfindungsgedanken nicht ein.
- **Figur 1**: zeigt das erfindungsgemäße Fahrzeuginnenausstattungsteil.
- **Figur 2**: zeigt eine Ausführungsform eines zweiten Teils.
- **Figur 3**: zeigt eine weitere Ausführungsform eines erfindungsgemäßen Fahrzeuginnenausstattungsteils.
- **Figur 4**: zeigt einen Schnitt durch das Fahrzeuginnenausstattungsteil gemäß Figur 3.
- **Figuren 5-8**: zeigen weitere Ausführungsformen des erfindungsgemäßen Fahrzeuginnenausstattungsteils.

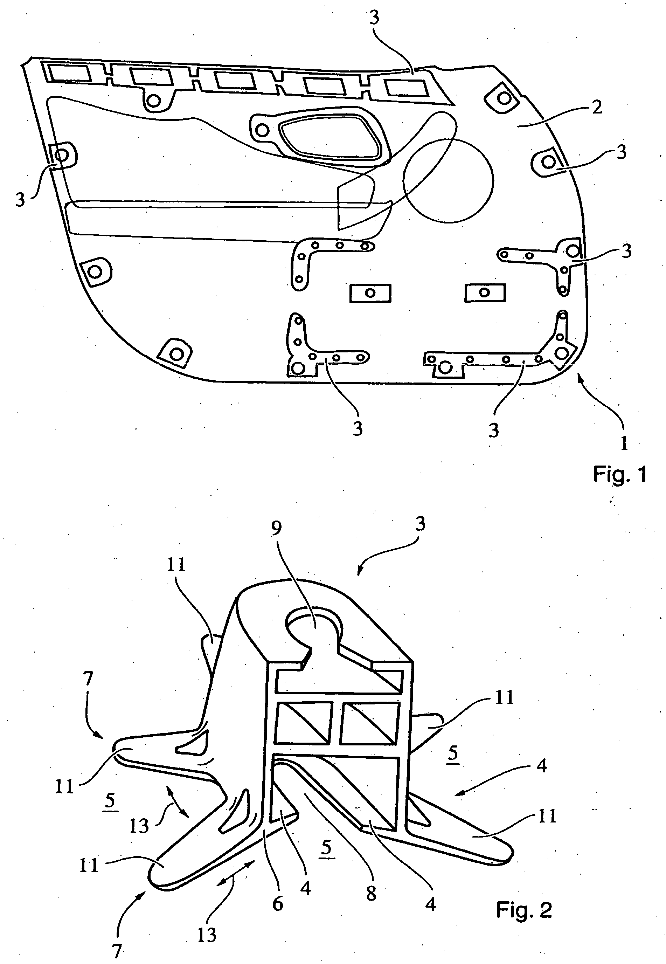

Figur 1 zeigt das erfindungsgemäße Fahrzeuginnenausstattungsteil 1, hier eine Türinnenverkleidung, die ein erstes flächenartig gestaltetes Verkleidungsteil 2 aufweist. Dieses Verkleidungsteil ist vorzugsweise aus einem Naturstoff beispielsweise einem Fasematurstoff und/oder einem Kunststoff gefertigt. An diesem ersten Teil 2, insbesondere an dessen Rückseite, d.h. an der dem Fahrgastraum abgewandten Seite ist/sind mindestens ein, hier mehrere zweite Teile 3 befestigt. Vorzugsweise erfolgt diese Befestigung durch einen Stoffschluss zwischen dem ersten und dem zweiten Teil 2, 3, der beispielsweise durch Kleben und/oder Hinterspritzen erzielt wird. Beim Hinterspritzen erfolgt der Stoffschluss zwischen dem ersten und dem zweiten Teil beim Aushärten des zweiten Teils. Dadurch, dass das erste Teil 2 und das zweite Teil 3 aus unterschiedlichen Werkstoffen gefertigt sind, unterscheidet sich ihr Längenausdehnungskoeffzient beispielsweise unter Temperatur und/oder Feuchtigkeitseinfluss. Alternativ oder zusätzlich schrumpft das zweite Teil 3 beim Aushärten und/oder das erste Teil dehnt sich durch Feuchtigkeit, die von dem zweiten in das erste Teil gelangt, aus. Erfindungsgemäß ist nun vorgesehen, dass mindestens eines der beiden Teile einen elastischen Befestigungsbereich aufweist, der sich bei der unterschiedlichen längenausdehnung elastisch verformt. Die Größe des Befestigungsbereichs errechnet sich aus der Höhe der zu erwartenden Kräfte. Bei dem zweiten Teil handelt es sich insbesondere um ein Befestigungsmittel, mit dem das erste Teil beispielsweise an der Türkarosserie des Fahrzeuges befestigt wird und/oder mit dem ein drittes Element an dem ersten Teil befestigt wird.

Figur 2 zeigt eine erste Ausführungsform eines zweiten Teils. Dieses weist in seinem oberen Teil eine Befestigungsausnehmung 9 auf, mittels derer das erste Teil an der Fahrzeugkarosserie befestigbar ist und/oder mit dem ein weiteres Element an dem ersten Teil befestigbar ist. In dem der Befestigungsausnehmung abgewandten Bereich des zweiten Teils ist der Befestigungsbereich 4 vorgesehen, der in dem vorliegenden Fall fingerartig 11 gestaltet ist. Die Finger 11 sind so dimensioniert, dass sie sich, wie durch die Doppelpfeile 13 dargestellt, sowohl verlängern und verkürzen als auch in der Befestigungsebene 5 biegen können. Die Dicke des Befestigungsbereichs 4, hier insbesondere der Finger 11, ist so dimensioniert, dass sie zum Rand des zweiten Teils 3 hin abnimmt. Dadurch erhöht sich die Elastizität des Befestigungsbereichs zum Rand hin. Des Weiteren weist der Befestigungsbereich 4 eine Entlastungsausnehmung 8, hier einen Entlastungsschlitz, auf, der für zusätzliche Elastizität des zweiten Teils im Befestigungsbereich sorgt.

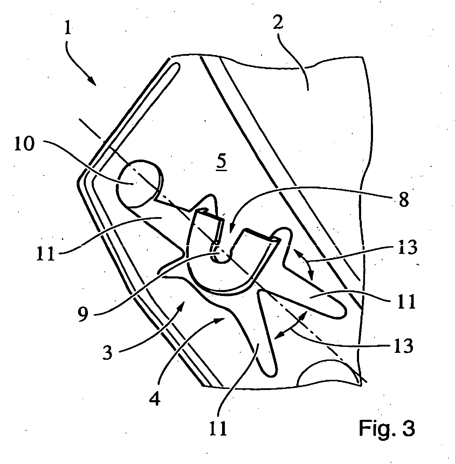

Figur 3 zeigt eine weitere Ausführungsform des erfindungsgemäßen Fahrzeuginnenausstattungsteils 1. Auch hier ist der Befestigungsbereich 4 des zweiten Teils 3 fingerartig vorgesehen, die sich, wie wiederrum durch die Doppelpfeile 13 dargestellt, sowohl verlängern und verkürzen als auch in der Befestigungsebene 5 biegen können. Es wird auf die Ausführungen gemäß Figur 2 Bezug genommen. In dem vorliegenden Fall, aber auch bei allen anderen hier beispielhaft vorgestellten Teilen 2, handelt es sich um ein Spritzgussteil, das eine Einspritzöffnung 10 aufweist, von der aus das Kunststoffmaterial in die entsprechende Form strömt. Vorzugsweise ist nun vorgesehen, dass diese Einspritzöffnung 10 Teil des Befestigungsbereichs 4 ist.

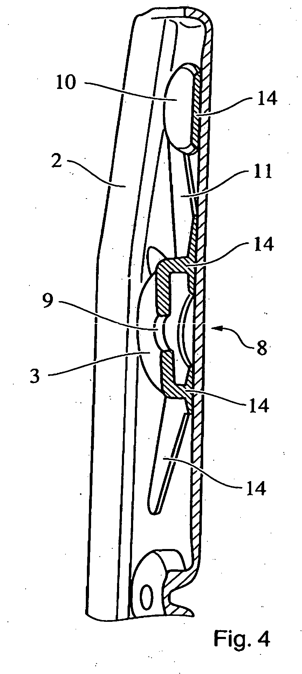

Figur 4 zeigt einen Schnitt durch das Fahrzeuginnenausstattungsteil gemäß Figur 3. Es ist deutlich zu erkennen, dass das zweite Teil abschnittsweise hohl vorgesehen ist, was zusätzlich die Elastizität des Bauteils erhöht und auch eine Gewichtsersparnis darstellt. In dem vorliegenden Fall sind die Einspritzöffnung 10 der Finger 11 sowie der Randbereich der Befestigungsausnehmung 9 hohl 14 vorgesehen. Der Fachmann versteht, dass es aber auch bevorzugt sein kann, lediglich einen dieser Bereiche hohl vorzusehen.

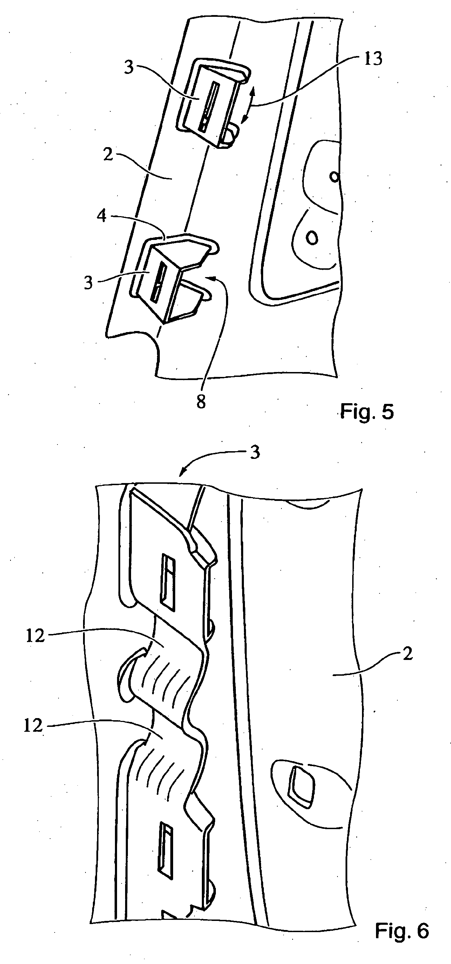

Figur 5 zeigt eine weitere Ausführungsform des erfindungsgemäßen Fahrzeuginnenausstattungsteils. Es wird auf die Ausführungen zu den vorher gemachten Figuren Bezug genommen.

Figur 6 zeigt eine weitere Ausführungsform des erfindungsgemäßen Fahrzeuginnenausstattungsteils. In dem vorliegenden Fall weist das zweite Teil Dehn- und/oder Federmittel 12 auf, die sich bei einer Dehnung des ersten Teils elastisch verlängern und/oder verkürzen lassen und dadurch Spannungen in dem ersten Teil vermeiden.

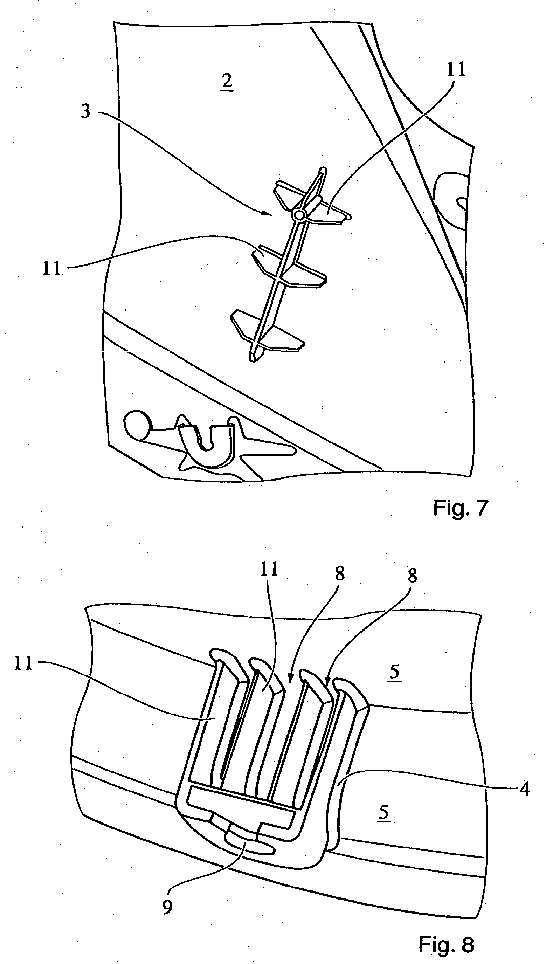

Figur 7 zeigt eine weitere Ausführungsform des erfindungsgemäßen Fahrzeuginnenausstattungsteils. Es wird auf die zu den Figuren 1-6 gemachten Ausführungsformen Bezug genommen.

Figur 8 zeigt eine weitere Ausführungsform des erfindungsgemäßen Fahrzeuginnenausstattungsteils. In dem vorliegenden Fall ist der Befestigungsbereich 4 dreidimensional gestaltet. Im Übrigen gelten die zu den vorherigen Figuren gemachten Ausführungen.

### Bezugszeichenliste:

- 1: Fahrzeuginnenausstattungsteil
- 2: erstes Teil, Verkleidungsteil
- 3: zweites Teil, Befestigungsmittel
- 4: Befestigungsbereich
- 5: Befestigungsebene
- 6: Dicke des Befestigungsbereichs
- 7: Rand des Befestigungsbereichs
- 8: Entlastungsausnehmung, Schlitz
- 9: Befestigungsausnehmung
- 10: Einspritzöffnung
- 11: Finger
- 12: Dehnmittel, Federmittel
- 13: elastische Deformation
- 14: Hohlraum

## Patentansprüche

1. Fahrzeuginnenausstattungsteil (1) in Gestalt einer Türinnenverkleidung mit einem ersten Teil, welches als ein flächenartiges Verkleidungsteil (2) gestaltet und aus Naturstoff gefertigt ist, und einem daran stoffschlüssig befestigten zweiten Teil (3) zum Befestigen des Verkleidungsteils (2) an einer Fahrzeugkarosserie, wobei das Verkleidungsteil (2) und das zweite Teil (3) bezüglich wenigstens einer Einflussgröße unterschiedliche Längenausdehnungskoeffizienten aufweisen, wobei das zweite Teil (3) ein Kunststoffgieß- und/oder Kunststoffspritzteil ist und über einen elastischen Befestigungsbereich (4) mit dem Verkleidungsteil (2) verbunden ist.

2. Fahrzeuginnenausstattungsteil (1) nach Anspruch 1, wobei die Dicke (6) des Befestigungsbereichs (4) zum Rand (7) hin abnimmt.

3. Fahrzeuginnenausstattungsteil (1) nach Anspruch 1 oder 2, wobei der Befestigungsbereich (4) in der Befestigungsebene (5) elastisch deformierbar vorgesehen ist.

4. Fahrzeuginnenausstattungsteil (1) nach einem der voranstehenden Ansprüche, wobei der Befestigungsbereich (4) eine elastische Schicht aufweist.

5. Fahrzeuginnenausstattungsteil (1) nach einem der voranstehenden Ansprüche, wobei sich der Befestigungsbereich (4) fingerartig (11) erstreckt.

6. Fahrzeuginnenausstattungsteil (1) nach einem der voranstehenden Ansprüche, wobei der Befestigungsbereich (4) zumindest abschnittsweise hohl vorgesehen ist.

7. Fahrzeuginnenausstattungsteil (1) nach einem der voranstehenden Ansprüche, wobei das zweite Teil (3) mehrere Befestigungsbereiche (4) aufweist, die in unterschiedliche Raumrichtungen weisen.

8. Fahrzeuginnenausstattungsteil (1) nach einem der voranstehenden Ansprüche, wobei der Befestigungsbereich (4) Entlastungsausnehmungen (8) aufweist.

9. Fahrzeuginnenausstattungsteil (1) nach einem der voranstehenden Ansprüche, wobei das zweite Teil (3) ein Kunststoffgieß- und/oder Kunststoffspritzteil ist und die Einspritzöffnung (10) Teil des Befestigungsbereichs (4) ist.

10. Fahrzeuginnenausstattungsteil (1) nach einem der voranstehenden Ansprüche, wobei das zweite Teil (3) ein Dehnelement (12) und/oder Federmittel (12) aufweist.

11. Fahrzeuginnenausstattungsteil (1) nach einem der voranstehenden Ansprüche, wobei das zweite Teil (3) ein Befestigungsmittel ist.

## Claims

1. A vehicle interior trim component (1) in the form of a door lining comprising a first part which is designed as a flat trim panel (2) and made from natural material and a second part (3) which is materially bonded thereto for attaching the trim panel (2) to a vehicle body, wherein the trim panel (2) and the second part (3) have different linear expansion coefficients with respect to at least one influencing variable, wherein the second part (3) is a plastic cast and/or plastic injection-molded part and is connected to the trim panel (2) by means of an elastic fastening region (4).

2. The vehicle interior trim component (1) according to claim 1, wherein the thickness (6) of the fastening region (4) decreases toward the edge (7).

3. The vehicle interior trim component (1) according to claim 1 or 2, wherein the fastening region (4) is elastically deformable in the fastening plane (5).

4. The vehicle interior trim component (1) according to any one of the preceding claims, wherein the fastening region (4) comprises an elastic layer.

5. The vehicle interior trim component (1) according to any one of the preceding claims, wherein the fastening region (4) extends in finger-like manner.

6. The vehicle interior trim component (1) according to any one of the preceding claims, wherein at least part of the fastening region (4) is hollow.

7. The vehicle interior trim component (1) according to any one of the preceding claims, wherein the second part (3) has a plurality of fastening regions (4) pointing in different spatial directions.

8. The vehicle interior trim component (1) according to any one of the preceding claims, wherein the fastening region (4) has relief recesses (8).

9. The vehicle interior trim component (1) according to any one of the preceding claims, wherein the second part (3) is a plastic cast and/or plastic injection-molded part and the injection port (10) is part of the fastening region (4).

10. The vehicle interior trim component (1) according to any one of the preceding claims, wherein the second part (3) comprises an expansion element (12) and/or spring means (12).

11. The vehicle interior trim component (1) according to any one of the preceding claims, wherein the second part (3) is a fastening means.

## Revendications

1. Élément d'équipement intérieur de véhicule (1) sous la configuration d'un habillage intérieur de porte comprenant une première partie, qui est conçue sous forme d'une partie d'habillage surfacique (2) et qui est fabriquée en matière naturelle, et une seconde partie (3) fixée sur celle-ci par coopération de matières afin de fixer la partie d'habillage (2) sur une carrosserie de véhicule, dans lequel la partie d'habillage (2) et la seconde partie (3) présentent, par référence à au moins une grandeur d'influence, différents coefficients d'extension longitudinale, et la seconde partie (3) est une partie en matière plastique coulée et/ou injectée, et est reliée à la partie d'habillage (2) via une zone de fixation élastique (4).

2. Élément d'équipement intérieur de véhicule (1) selon la revendication 1, dans lequel l'épaisseur (6) de la zone de fixation (4) diminue en direction de la bordure (7).

3. Élément d'équipement intérieur de véhicule (1) selon la revendication 1 ou 2, dans lequel la zone de fixation (4) est prévue de manière à pouvoir être déformée élastiquement dans le plan de fixation (5).

4. Élément d'équipement intérieur de véhicule (1) selon l'une des revendications précédentes, dans lequel la zone de fixation (4) comprend une couche élastique.

5. Élément d'équipement intérieur de véhicule (1) selon l'une des revendications précédentes, dans lequel la zone de fixation (4) s'étend à la manière d'un doigt (11).

6. Élément d'équipement intérieur de véhicule (1) selon l'une des revendications précédentes, dans lequel la zone de fixation (4) est prévue creuse au moins localement.

7. Élément d'équipement intérieur de véhicule (1) selon l'une des revendications précédentes, dans lequel la seconde partie (3) comprend plusieurs zones de fixation (4) qui sont orientées dans des directions différentes dans l'espace.

8. Élément d'équipement intérieur de véhicule (1) selon l'une des revendications précédentes, dans lequel la zone de fixation (4) comporte des évidements de décharge (8).

9. Élément d'équipement intérieur de véhicule (1) selon l'une des revendications précédentes, dans lequel la seconde partie (3) est une partie en matière plastique coulée et/ou injectée, et l'ouverture d'injection (10) fait partie de la zone de fixation (4).

10. Élément d'équipement intérieur de véhicule (1) selon l'une des revendications précédentes, dans lequel la seconde partie (3) comprend un élément extensible (12) et/ou un moyen à ressort (12).

11. Élément d'équipement intérieur de véhicule (1) selon l'une des revendications précédentes, dans lequel la seconde partie (3) est un moyen de fixation.
